# EUROPEAN PATENT APPLICATION

(11) **EP 3 170 651 A1**
(43) Date of publication of application: **24.05.2017**
(21) Application number: 15195373.4
(22) Date of filing: 19.11.2015
(51) Int. Cl.: B29C 70/56

(54) **MANUFACTURING METHOD FOR THERMOFORMING A FIBER-REINFORCED COMPOSITE LAMINATE**

(71) Applicant: Airbus Operations GmbH, 21129 Hamburg (DE)
(72) Inventor: Ehring, Benjamin, 21129 Hamburg (DE)
(74) Representative: Isarpatent

(57) **Abstract**

The present invention pertains to a manufacturing method for thermoforming a fiber-reinforced composite laminate (1). The fiber-reinforced composite laminate (1) includes fiber rovings (2) embedded within a thermoplastic matrix (4). The manufacturing method comprises mounting fiber rovings (2) to a transport frame (5), wherein the mounted fiber rovings (2) are arranged to form a support grid layer (3) that is laterally framed by the transport frame (5), each fiber roving (2) being mounted on both ends under tension to the transport frame (5); placing a matrix material layup of thermoplastic material on top of the support grid layer (3) on the transport frame (5), wherein the tension of the fiber rovings (2) and a density of the support grid layer (3) are configured such that the support grid layer (3) supports the matrix material layup; softening the matrix material layup by heating the support grid layer (3) together with the matrix material layup within a heating station (8); forming a semi-finished composite laminate (1') by pressing the support grid layer (3) together with the softened matrix material layup within a press (6); and consolidating the semi-finished composite laminate (1') to form the fiber-reinforced composite laminate (1).

## Description

The present invention pertains to a manufacturing method for thermoforming a fiber-reinforced composite laminate. In particular, the present invention pertains to manufacturing methods for thermoforming fiber-reinforced composite laminates for use in aircraft or spacecraft.

Although applicable to manufacturing composite laminates for use in various technical applications, for example for the production of components of landborne, waterborne or airborne vehicles or the like, the present invention and the problem on which it is based will be explained in greater detail with reference to manufacturing methods of fiber-reinforced composite laminates for commercial aircraft.

In aircraft construction, structural components are increasingly composed partly or wholly of fiber-reinforced composite materials, for example carbon fiber-reinforced plastics (CFRP). For the manufacture of covers and/or skins for large-scale fiber-reinforced aircraft parts, e.g. flaps, ailerons, rudders and the like, time- and cost-consuming hand-layup and autoclave processes are widely used. Here, a layered laminate is built up from reinforcing fibers and an uncured plastic material, for example a thermoset material. The plastic material is subsequently cured in an autoclave cycle under pressure and/or temperature, so that a composite material is obtained with a matrix made of cured plastic and reinforcing fibers embedded therein.

Unlike for thermoset plastic materials, the consolidation of thermoplastic plastic materials is reversible, i.e. these materials can be (re-)transformed into a plastically deformable state as often as desired by applying heating. Due to this, individual components can for example be interconnected with each other in a relatively straightforward and cost-efficient way to form larger aircraft structures by employing welding processes or the like (in contrast to the more conventional bonding and/or riveting or the like of components). For such reasons, efforts are thus being made to use fiber-reinforced composite materials with a thermoplastic matrix and process them by time- and energy-saving hot pressing.

However, thermoforming press processes are usually only employed to produce small thermoplastic parts. This can be attributed to the fact that it is difficult to position large scale laminates inside a press and subsequently close the press tooling without simultaneously raising tolerance issues and consequently risking unsatisfactory consolidated laminate quality. The tolerance issues may come up because the pre-stacked laminate with ramps and joggles needs to be heated up before it can be placed inside the press tooling. During the heating phase, the layup typically exhibits a behavior like a "wet cleaning rag" so that the single plys may slide against each other and eventually may get out of tolerance.

Conventionally, the laminates are often end-supported by springs within a transport frame. This fixation may lead to a sagging of the laminate, which then may cause a sliding of the single plys. Further, mounting the laminates with springs implies that the laminate cannot be actively adjusted during the positioning procedure inside the press tooling and that any adjustment solely originates from the elasticity of the springs.

It is an object of the present invention to provide solutions for automated manufacturing of large scale fiber-reinforced composite laminates in an time-, cost-, and energy-saving manner.

This object is achieved by a method having the features of claim 1.

According to the invention, a manufacturing method is provided for thermoforming a fiber-reinforced composite laminate. The fiber-reinforced composite laminate includes fiber rovings embedded within a thermoplastic matrix. The manufacturing method comprises mounting fiber rovings to a transport frame, wherein the mounted fiber rovings are arranged to form a support grid layer that is laterally framed by the transport frame, each fiber roving being mounted on both ends under tension to the transport frame. The manufacturing method further comprises placing a matrix material layup of thermoplastic material on top of the support grid layer on the transport frame, wherein the tension of the fiber rovings and a density of the support grid layer are configured such that the support grid layer supports the matrix material layup. The manufacturing method further comprises softening the matrix material layup by heating the support grid layer together with the matrix material layup within a heating station. The manufacturing method further comprises forming a semi-finished composite laminate by pressing the support grid layer together with the softened matrix material layup within a press. The manufacturing method further comprises consolidating the semi-finished composite laminate to form the fiber-reinforced composite laminate.

One idea of the present invention is to employ fiber rovings for several different purposes at the same time. First, the fiber rovings are used as a form of support for the matrix material to be consolidated, and, second, they constitute the reinforcement of the matrix material, i.e. of the final composite laminate. For this, the fiber rovings are mounted under tension to a transport frame and are arranged in form of a support grid layer. The matrix material layup may be pre-stacked and positioned on this support grid layer of fiber rovings. The transport frame is thus loaded with fiber rovings and a matrix material layup placed thereupon. Next the transport frame may be moved along a manufacturing line. For example, the transport frame may be prepared with fiber rovings and matrix material at a work station and then moved to a heating station, where the fiber rovings and the matrix material layup may be heated from above and below. Next, the transport frame may be moved from the heating station into a press. After forming and consolidating the fiber-reinforced composite laminate within the press, the fiber rovings may be cut at their respective ends from the transport frame in order to free the fiber-reinforced composite laminate from the transport frame. The fiber rovings are consequently co-consolidated with the matrix material and remain within the laminate.

The method according to the invention is able to handle very large composite laminates, e.g. 1 m by 4 m and larger, because the fiber rovings themselves are mounted with properly chosen pre-tension. This stands in contrast to a spring-frame where the laminate itself is end-supported. Thus in the present case, the heated layup will not sag like a wet cleaning rag and therefore single plys of the layup will not slide against each other. Hence, alignment as well as tolerance of the laminate is well under control in the method according to the invention. Particularly advantageous is the reduction of costs, energy consumption, and lead time as the thermoforming press process according to the invention may be implemented in an automatized way.

A transport frame according to the invention is a stiff structure with means for mounting fiber rovings on several sides, e.g. by using mounting devices like pins, clamps, screws, lugs and so on. For example, a transport frame according to the invention may be configured in the form of a flat hollow square or rectangle with a plurality of mounting devices attached to all four inner sides, wherein opposite sides may be configured identically with pairs of mounting devices opposing each other. The fiber rovings are arranged in a grid-like structure, wherein the grid density may be optimized to fit the size and weight of the matrix material layup to be consolidated. A grid according to the invention comprises a pattern of lines that cross each other to form squares or other geometric arrangements within a basically two-dimensional plane.

Advantageous embodiments and improvements of the present invention are found in the subordinate claims.

According to an embodiment, forming the semi-finished composite laminate may comprise automatically adjusting at least one of the tension and a position of the fiber rovings. As the fiber rovings may be adjusted in position and/or tension, it is easier to form a heated semi-finished laminate according to the shape of the final composite laminate. For example, the fiber rovings may be arranged according to a curved tooling surface for forming curved laminates. This further helps optimizing alignment and/or tolerance of the composite laminate.

According to an embodiment, at least one of the tension and the position of each fiber roving may be adjusted individually. Hence, any single fiber roving may be automatically adjusted either in position or in tension or in both position and tension during forming of the layup inside the press tooling. Thus, the fiber rovings can be optimally arranged according to the target shape of the composite component.

According to an embodiment, each fiber roving may be mounted on the transport frame by means of a mounting device per end. Hence, each fiber roving may be mounted to the transport frame at both ends with a respective mounting device.

According to an embodiment, the tension of each fiber roving may be adjusted by moving one or both of the respective mounting devices relative to the transport frame in a direction defined by the respective fiber roving. Hence, the mounting devices may be actively used to adjust the (pre-)tension of each individual fiber roving.

According to an embodiment, the position of each fiber roving may be adjusted by moving one or both of the respective mounting devices relative to the transport frame. For example, the mounting devices may be actively moved in the plane of the support grid layer, which may be equal to the plane of the transport frame, for positioning aspects or the like.

According to an embodiment, the position of each fiber roving may be adjusted by moving one or both of the respective mounting devices relative to the transport frame in a direction generally perpendicular to the support grid layer. Particularly, the mounting devices may hence be actively moved along the height of the transport frame.

According to an embodiment, forming the semi-finished composite laminate may comprise shaping the semi-finished composite laminate with a shaping tool according to a predetermined shape. For this, every degree of freedom of the mounting devices may be used to automatically control the behavior of the forming of the composite laminate. The person of skill will readily acknowledge wether every available degree of freedom is really needed during the process. According to the application at hand, it might be advisable to have only a small number of degrees of freedom and hence keep the transport frame as simple as possible. Even with a very simple transport frame there is some control over the forming process as the mounting (pre-)tension as well as shape and/or density of the support grid layer may be chosen specifically for the use case at hand. In some applications, further active manipulation of the fiber roving tension and/or position may then not be necessary.

According to an embodiment, at least one of the tension and the position of the fiber rovings may be automatically adjusted such that the fiber rovings are arranged according to the predetermined shape.

According to an embodiment, the method may further comprise cutting ends of the fiber rovings protruding from the fiber-reinforced composite laminate to separate the fiber-reinforced composite laminate from the transport frame. The fiber rovings are co-consolidated with the matrix material after the process is finished, so new fiber rovings may be mounted to the transport frame for each fiber-reinforced composite laminate that is going to be manufactured.

According to an embodiment, the support grid layer may be heated together with the matrix material layup within the heating station by infrared radiation. However, in principle also other known heating methods may be employed.

According to an embodiment, the method may further comprise welding fiber-reinforced composite laminates together to form a fiber-reinforced composite component.

According to an embodiment, the fiber-reinforced composite component may be formed as a structural component of an aircraft or spacecraft. For example, the fiber- reinforced composite laminates may form covers and/or skins for large-scale fiber-reinforced aircraft parts, e.g. flaps, ailerons, rudders and the like. For this, several fiber-reinforced composite laminates may be welded or fused together to form larger aircraft structures. For example, the method according to the invention may be used to manufacture skins (bottom or top cover) for any type of large scale "box-like" aircraft structure, e.g. flaps, ailerons, rudders, elevators and so on.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically illustrates a structural component of an aircraft including fiber-reinforced composite laminates manufactured with a method according to an embodiment of the invention.
Fig. 2 schematically illustrates an aircraft being equipped with the structural component of Fig. 1.
Fig. 3 schematically illustrates a flow diagram of the manufacturing method used for the manufacturing of the structural component of Fig. 1.
Figs. 4a and 4b schematically show a cross-sectional view and a top view of a transport frame employed in the manufacturing method of Fig. 3.
Fig. 5 schematically shows selected manufacturing steps of the method of Fig. 3.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

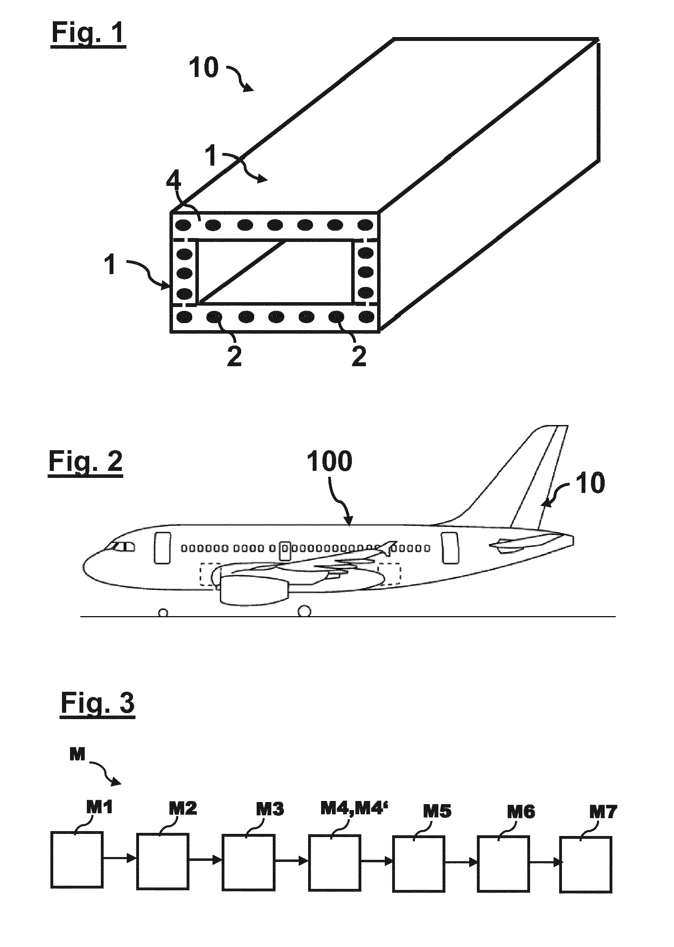

Fig. 1 schematically illustrates a structural component of an aircraft including fiber-reinforced composite laminates manufactured with a method according to an embodiment of the invention.

In Fig. 1 reference sign 10 denotes a structural component, which comprises several fiber-reinforced composite laminates 1. Each fiber-reinforced composite laminate 1 comprises a plurality of fiber rovings 2 embedded within a thermoplastic matrix 4. The structural component 10 may be equipped within an aircraft 100 as schematically illustrated in Fig. 2. The structural component 10 may be for example a rudder or similar. The structural component 10 is depicted in Fig. 1 in a very schematic way. Fig. 1 merely illustrates that several fiber-reinforced composite laminates 1 may be welded or fused together to form a larger structural component 10 of an aircraft 100. A possible underlying structure of the structural component 10 of the aircraft 100 is left out in Fig. 1 for reasons of simplicity. Hence, the fiber-reinforced composite laminates 1 in Fig. 1 may cover an underlying framework or construction of the structural component 10, the framework itself not being depicted here. The fiber-reinforced composite laminates 1 in Fig. 1 may thus constitute a cover or skin of the structural component 10.

Fig. 3 schematically illustrates a flow diagram of the manufacturing method M used for the manufacturing of the structural component 10 of Fig. 1. The manufacturing method M comprises under M1 mounting fiber rovings 2 to a transport frame 5. The mounted fiber rovings 2 are arranged to form a support grid layer 3 that is laterally framed by the transport frame 5. Each fiber roving 2 is mounted on both ends under tension to the transport frame 5. The manufacturing method M further comprises under M2 placing a matrix material layup 7 of thermoplastic material on top of the support grid layer 3 on the transport frame 5. Here, the tension of the fiber rovings 2 and/or a density of the support grid layer 3 are configured such that the support grid layer 3 supports the matrix material layup 7. The manufacturing method M further comprises under M3 softening the matrix material layup 7 by heating the support grid layer 3 together with the matrix material layup 7 within a heating station 8, e.g. by infrared radiation 12 other appropriate means.

The manufacturing method M further comprises under M4 forming a semi-finished composite laminate 1' by pressing the support grid layer 3 together with the softened matrix material layup 7 within a press 6. This may include under M4' automatically adjusting at least one of the tension and a position of the fiber rovings 2. Each fiber roving 2 may be adjusted individually and/or several or all fiber rovings 2 may be adjusted collectively. This may further include shaping the semi-finished composite laminate 1' with a shaping tool 11 according to a predetermined shape. At least one of the tension and the position of the fiber rovings 2 may be automatically adjusted such that the fiber rovings 2 are arranged according to the predetermined shape.

Next the method M comprises under M5 consolidating the semi-finished composite laminate 1' to form the fiber-reinforced composite laminate 1. The thermoplastic matrix 4 of the fiber-reinforced composite laminate 1 is thus formed by the first softened and then cured matrix material layup 7. Due to the pressing processs the fiber rovings 2 are embedded within the thermoplastic matrix 4. The method M may further comprise under M6 cutting the ends of the fiber rovings 2 protruding from the fiber-reinforced composite laminate 1 to separate the fiber-reinforced composite laminate 1 from the transport frame 5. Finally, the method M may comprise under M7 welding fiber-reinforced composite laminates 1 together to form a fiber-reinforced composite component 10.

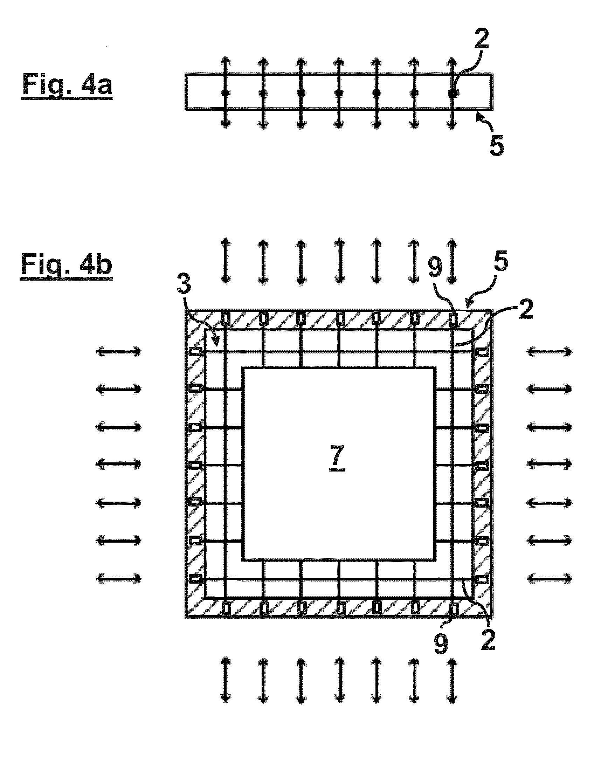

Figs. 4a and 4b schematically show a cross-sectional view and a top view of a transport frame 5 employed in the manufacturing method M of Fig. 3. The transport frame 5 is configured in the form of a flat hollow square with a plurality of mounting devices 9 attached to all four inner sides. The mounting devices 9 may comprise, without any limitation, pins, clamps, screws, lugs and so on. The four sides of the depicted transport frame 5 are identical, with opposite sides having pairs of mounting devices 9 opposing each other. The fiber rovings 2 are hence arranged in a quadratic grid-like structure, wherein the grid density is chosen to fit the size and weight of the matrix material layup 7 placed upon the support grid layer 3 to be consolidated.

The person of skill will readily acknowledge that different geometries and configurations of the transport frame 5 may be chosen depending on the specific use case. Furthermore, the arrangement and configuration of the mounting devices 9, and thus of the resulting support grid layer 3, is of purely exemplary nature. A grid according to the invention comprises any pattern of lines that cross each other to form squares or other geometric arrangements within a basically two-dimensional plane. For example, rectangular or lozenge-shaped or other forms may be achieved by arranging the fiber rovings 2 perpendicular or inclined to each other or in other grid arrangements.

Each fiber roving 2 is mounted on the transport frame 5 by means of two mounting devices 9, i.e. one mounting device 9 per end. The tension of each fiber roving 2 may be adjusted by help of the mounting devices 9. For example, the tension may be adjusted by moving one or both of the respective mounting devices 9 relative to the transport frame 5 in a direction defined by the respective fiber roving 2. For this, the mounting devices 9 may be movably connected to the transport frame 5. Alternatively, the mounting devices 9 may be configured to affect the tension of the fiber rovings 2 directly without any direct movement of the mounting device 9 itself. In a similar way, the position of each fiber roving 2 may be adjusted by moving one or both of the respective mounting devices 9 relative to the transport frame 5. For example, the position of each fiber roving 2 may be adjusted by moving one or both of the respective mounting devices 9 relative to the transport frame 5 in a direction generally perpendicular to the support grid layer 3. Or, the mounting devices 9 may be actively moved in the plane of the transport frame 5. The degrees of freedom of the mounting devices 9 are indicated by arrows in Figs. 4a and 4b.

Further, the person of skill will be able to elaborate on basis of the present teachings that there are several alternative strategies on how to mount fiber rovings 2 to the transport frame 5. It is possible to mount a plurality of fiber rovings 2 to the transport frame 5 by mounting individual fiber rovings 2 in between two mounting devices 9 on opposite sides of the transport frame 5. However, an alternative solution would be to mount one single elongated fiber on the transport frame 5 by winding the fiber consecutively from one mounting device 9 to the next until a support grid layer 3 is formed. For example, one could start by fixing the fiber to a first mounting device 9, then stretch it from there to one mounting device 9 on the opposite side of the transport frame 5, fix it there, e.g. by knotting or tying it around a pin or similar, then drag it for example to one adjacent mounting device 9 on the same side or on the other side, mount it there, and so on until a support grid layer 3 is formed that is framed by the transport frame 5.

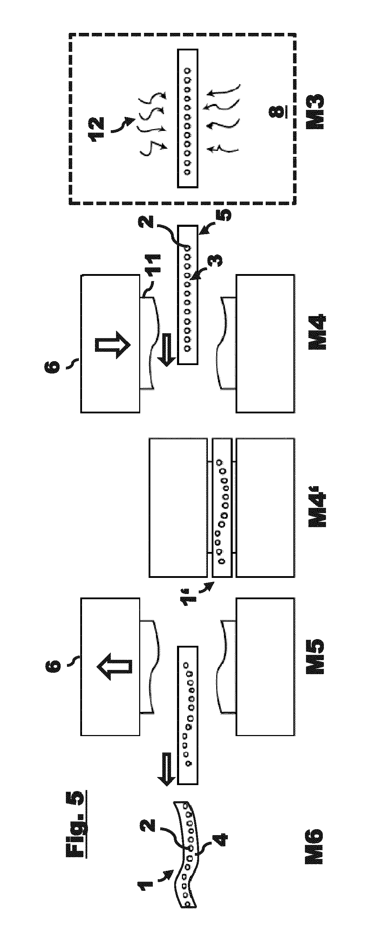

Fig. 5 schematically shows selected manufacturing steps of the method M of Fig. 3. The production process runs from right to left in Fig. 5. At M3, the matrix material layup 7 (not shown) that is placed on top of the support grid layer 3 of fiber rovings 2 on the transport frame 5 is softened by heating the support grid layer 3 together with the matrix material layup 7 within a heating station 8 by infrared radiation 12 other suitable means. Next at M4, the transport frame 5 is moved into a press 6 (see arrow in Fig. 5), which includes a shaping tool 11. Here, a semi-finished composite laminate 1' is formed by pressing the support grid layer 3 together with the softened matrix material layup 7. This includes under M4' shaping the semi-finished composite laminate 1' with the shaping tool 11 according to a predetermined shape by automatically adjusting at least one of the tension and a position of the fiber rovings 2 according to the predetermined shape. Each fiber roving 2 may be adjusted individually and/or several or all fiber rovings 2 may be adjusted collectively.

Next the method M comprises under M5 consolidating the semi-finished composite laminate 1' to form the fiber-reinforced composite laminate 1. Finally, the method M comprise under M6 cutting the ends of the fiber rovings 2 protruding from the fiber-reinforced composite laminate 1 to separate the fiber-reinforced composite laminate 1 from the transport frame 5. The fiber rovings 2 are consequently co-consolidated with the thermoplastic matrix 4 and remain as reinforcements of the fiber-reinforced composite laminate 1.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: fiber-reinforced composite laminate
- 1': semi-finished composite laminate
- 2: fiber roving
- 3: support grid layer
- 4: thermoplastic matrix
- 5: transport frame
- 6: press
- 7: matrix material layup
- 8: heating station
- 9: mounting device
- 10: fiber-reinforced composite component
- 11: shaping tool
- 12: infrared radiation
- 100: aircraft
- M: method
- M1: method step
- M2: method step
- M3: method step
- M4, M4': method step
- M5: method step
- M6: method step
- M7: method step

## Claims

1. Manufacturing method (M) for thermoforming a fiber-reinforced composite laminate (1), the fiber-reinforced composite laminate (1) including fiber rovings (2) embedded within a thermoplastic matrix (4), the manufacturing method (M) comprising:
mounting (M1) fiber rovings (2) to a transport frame (5), wherein the mounted fiber rovings (2) are arranged to form a support grid layer (3) that is laterally framed by the transport frame (5), each fiber roving (2) being mounted on both ends under tension to the transport frame (5);
placing (M2) a matrix material layup (7) of thermoplastic material on top of the support grid layer (3) on the transport frame (5), wherein the tension of the fiber rovings (2) and a density of the support grid layer (3) are configured such that the support grid layer (3) supports the matrix material layup (7);
softening (M3) the matrix material layup (7) by heating the support grid layer (3) together with the matrix material layup (7) within a heating station (8);
forming (M4) a semi-finished composite laminate (1') by pressing the support grid layer (3) together with the softened matrix material layup (7) within a press (6); and
consolidating (M5) the semi-finished composite laminate (1') to form the fiber-reinforced composite laminate (1).

2. Method (M) according to claim 1, wherein forming (M4) the semi-finished composite laminate (1') comprises automatically adjusting (M4') at least one of the tension and a position of the fiber rovings (2).

3. Method (M) according to claim 2, wherein at least one of the tension and the position of each fiber roving (2) is adjusted individually.

4. Method (M) according to one of the claims 1 to 3, wherein each fiber roving (2) is mounted on the transport frame (5) by means of a mounting device (9) per end.

5. Method (M) according to claim 4, wherein the tension of each fiber roving (2) is adjusted by moving one or both of the respective mounting devices (9) relative to the transport frame (5) in a direction defined by the respective fiber roving (2).

6. Method (M) according to claim 4 or 5, wherein the position of each fiber roving (2) is adjusted by moving one or both of the respective mounting devices (9) relative to the transport frame (5).

7. Method (M) according to claim 6, wherein the position of each fiber roving (2) is adjusted by moving one or both of the respective mounting devices (9) relative to the transport frame (5) in a direction generally perpendicular to the support grid layer (3).

8. Method (M) according to one of the claims 1 to 7, wherein forming (M4) the semi-finished composite laminate (1') comprises shaping the semi-finished composite laminate (1') with a shaping tool (11) according to a predetermined shape.

9. Method (M) according to claim 8, wherein at least one of the tension and the position of the fiber rovings (2) are automatically adjusted such that the fiber rovings (2) are arranged according to the predetermined shape.

10. Method (M) according to one of the claims 1 to 9, the method (M) further comprising:
cutting (M6) ends of the fiber rovings (2) protruding from the fiber-reinforced composite laminate (1) to separate the fiber-reinforced composite laminate (1) from the transport frame (5).

11. Method (M) according to one of the claims 1 to 10, wherein the support grid layer (3) is heated together with the matrix material layup (7) within the heating station (8) by infrared radiation (12).

12. Method (M) according to one of the claims 1 to 11, the method (M) further comprising:
welding (M7) fiber-reinforced composite laminates (1) together to form a fiber-reinforced composite component (10).

13. Method (M) according to claim 12, wherein the fiber-reinforced composite component (10) is formed as a structural component of an aircraft or spacecraft (100).
